# EUROPÄISCHE PATENTANMELDUNG

(11) **EP 2 975 090 A1**
(43) Veröffentlichungstag der Anmeldung: **20.01.2016**
(21) Anmeldenummer: 14177049.5
(22) Anmeldetag: 15.07.2014
(51) Int. Cl.: C09B 67/22, C08J 3/00, C09B 67/46, C08K 5/10, C08K 5/00

(54) **Pigmentpräparationen**

(71) Anmelder: LANXESS Deutschland GmbH, 50569 Köln (DE)
(72) Erfinder: Weyer-Kramer, Alexandra, Dr., 51149 Köln (DE); Augustin, Thomas, Dr., 51427 Bergisch Gladbach (DE); Cwojdziniki-Buslei, Matthias, 51766 Engelskirchen (DE); Strauch, Guido, 51373 Leverkusen (DE); Gauls, Kai, 51109 Köln (DE); Raab, Michael, 50999 Köln (DE)

(57) **Zusammenfassung**

Die neue Zubereitungen auf Basis von Pigmenten und Alkansulfonsäurearylestem eignen sich hervorragend zum Einfärben von technischen Materialien, insbesondere Kunststoffen und zeichnen sich dadurch aus, sie ohne Zusatz von flockungsstabilisierenden Dispergiermitteln über einen langen Zeitraum flockungsstabil sind und wasser- und lösemittelfrei sowie phthalatfrei sind.

## Beschreibung

Die vorliegende Erfindung betrifft neue Zubereitungen auf Basis von Pigmenten und Alkansulfonsäurearylestern und deren Verwendung zum Einfärben von technischen Materialien, insbesondere Kunststoffen.

Pigmente sind farbgebende Substanzen die, im Gegensatz zu Farbstoffen, im Anwendungsmedium unlöslich sind. Anwendungsmedium bezeichnet dabei den Stoff, in den das Pigment eingearbeitet wird, beispielsweise in Lacke oder in Kunststoffe.

Pigmente entstehen typischerweise in Form der Primärteilchen. Die Primärteilchen können über ihre Flächen zu Aggregaten zusammenwachsen. Von Agglomeraten spricht man, wenn Primärteilchen und/oder Aggregate über ihre Ecken/Kanten verbunden sind. Durch den Dispergierprozess (Dispergierung) beim Einarbeiten der Pigmente in ein Anwendungsmedium werden die Pigment-Agglomerate zerkleinert. Es entstehen kleinere Agglomerate, Aggregate und Primärteilchen. Diese werden, so vorhanden, durch ein Dispergiermedium benetzt und separiert. Dabei werden sie idealerweise statistisch über das Anwendungsmedium verteilt.

Pigmente werden bevorzugt in Form von Pigmentpräparationen eingesetzt. Diese, je nach Zusammensetzung, flüssigen, teigigen oder pastösen Pigmentpräparationen enthalten unterschiedliche Pigmentkonzentrationen je nach Einsatzgebiet. Vorteil von Pigmentpräparationen ist ihre einfache und exakte Einarbeitbarkeit in das Anwendungsmedium, da das Pigment in der Präparation bereits dispergiert und standardisiert vorliegt.

Die Pigmentpräparationen enthalten üblicherweise Additive die zur Stabilisierung der Pigmentpräparationen dienen und ein Reagglomerieren der dispergierten Pigmentteilchen und somit ein Ausflocken der Pigmentteilchen verhindern sollen.. Flockt die Präparation trotzdem aus ist das Aufrühren des festen Bodensatzes meist nur schwer möglich und die Präparation wird unbrauchbar.

Als flockungsstabilisierende Additive werden üblicherweise Dispergiermittel eingesetzt.

Solche Dispergiermittel sind z.B. pigmentäre Dispergiermittel, die sich von einem organischen Pigment als Grundkörper ableiten und durch chemische Modifizierung dieses Grundkörpers hergestellt werden, beispielsweise saccharinhaltige oder piperidylhaltige Pigmentdispergatoren, von Naphthalin oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, sulfonsäure-gruppenhaltige Pigmentdispergatoren, sulfonamidgruppenhaltige Pigmentdispergatoren, Ethergruppen haltige Pigmentdispergatoren; oder Carbonsäure-, Carbonsäureester- oder Carbonamidgruppen haltige Pigmentdispergatoren.

Weiterhin geeignet sind nichtpigmentäre Dispergiermittel wie beispielsweise Tenside. Als Tenside kommen anionische oder anionaktive, kationische oder kationaktive und nichtionische Substanzen oder Mischungen dieser Mittel in Betracht. Bevorzugt sind solche Tenside oder Mischungen von Tensiden, die bei der Mahlung mit den Pigmenten nicht schäumen.

Weiterhin geeignet sind Dispergiermittel, die strukturell nicht durch chemische Modifikation von organischen Pigmente abgeleitet sind. Sie werden auch bei anderen Verfahren als Dispergiermittel verwendet, beispielsweise können sie bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln; eingesetzt werden.

Es können polymere Substanzen, beispielsweise Polyolefine, Polyester, Polyether, Polyamide, Polyimine, Polyacrylate, Polyisocyanate, Block-Copolymere daraus, Copolymere aus den entsprechenden Monomeren, oder Polymere einer Klasse, die mit wenigen Monomeren einer anderen Klasse modifiziert sind; sein. Diese polymeren Substanzen tragen polare Ankergruppen wie beispielsweise Hydroxy-, Amin-; Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Nichtpigmentäre Dispergiermittel können des Weiteren auch chemisch mit funktionellen Gruppen modifizierte aromatische, nicht von organischen Pigmenten abgeleitete Substanzen sein. Derartige nichtpigmentäre Dispergiermittel sind dem Fachmann bekannt und zum Teil im Handel
erhältlich (z.B.Solsperse®, Avecia; Disperbyk , Byk, Efka® ; Efka). Es sollen im Folgenden stellvertretend einige Typen genannt werden, zum Einsatz können jedoch prinzipiell beliebige andere, beschriebene Substanzen kommen, beispielsweise Kon- densationsprodukte aus Isocyanaten und Alkoholen, Di- oder Polyolen, Aminoalkoholen oder Di- oder Polyaminen, Polymere aus Hydroxycarbonsäuren, Copolymere aus Olefinenmonomeren oder Vinylmonomeren und ethylenisch ungesättigten Carbonsäuren/-estern, Urethan-haltige Polymere von ethylenisch ungesättigten Monomeren, Urethan-modifizierte Polyester, Kondensationsprodukte auf Basis von Cyanurhalogeniden, Nitroxylverbindungen enthaltende Polymere, Polyesteramide, modifizierte Polyamide, modifizierte Acryl-polymere, Kammdispergiermittel aus Polyestern und Acrylpolymeren, Phosphorsäureester, von Triazin abgeleitete Polymere, modifizierte Polyether; oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.

Weiterhin zur Dispergierung geeignet sind Harze wie beispielsweise Novolake, Alkydmelaminharze, Acrylmelaminharze oder Polyurethanharze.

Auch in der Kunststoffindustrie finden Pigmentpräparationen zum Einfärben von Kuststoffen Verwendung., Diese Pigmentpräparationen basieren auf nicht-wässrigen Systemen. Diese beinhalten meist Trägermaterialien wie z.B. Edukte der einzufärbenden Kunststoffe, Kunststoffsuspensionen oder Weichmacher.. Auch hier würde ein Ausflocken der Pigmente sich nachteilig auf die Verarbeitbarkeit der Präparation im Kunststoff auswirken. Daher finden auch hier flockungsstabilisierende Additive wie Dispergiermittel auf nicht-wässriger Basis Anwendung. Diese flockungsstabilisierenden Additive können jedoch auch von Nachteil sein, da sie im Anwendungsmedium unerwünschte Wechselwirkungen verursachen können. Aus EP-A 1 195 414 ist ein Verfahren zur Herstellung von flüssigen Pigmentpräparationen unter Einsatz eines hochenergetischen Mikrojetreaktors bekannt, wobei ein flockungsstabilisierende flüssiges Medium eingesetzt wird welches pigmentäre oder nichtpigmentäre Dispergiermittel, Harze oder Weichmacher und Lösungsmittel enthalten kann. Nachteilig an diesem Verfahren ist der Einsatz von Dispergiermitteln weil diese die Eigenschaften des Endproduktes negativ beeinflussen können.

Aus dem Stand der Technik ist weiterhin bekannt, dass durch eine Oberflächenbehandlung oder "coaten" der Pigmentteilchen deren Neigung zur Agglomeration verringert werden kann. Auch ein Kapselung der Pigmente kann angewendet werden. Nachteilig an diesen Methoden ist der höhere technische Aufwand bedingt durch einen weiteren Verarbeitungsschritt.

Aufgabe der vorliegenden Erfindung war es flüssige, teigige oder pastöse Pigmentpräparationen für nicht-wässrige Anwendungen bereit zu stellen, wobei auf die Zugabe von flockungsstabilisierenden Additiven und den Einsatz von aufwendigen technischen Geräten zur Dispergierung verzichtet werden kann, die jedoch die gleiche Ausflockungsstabilität bei universeller Einsetzbarkeit aufweisen.

Es wurde gefunden, dass Verbindungen aus der Klasse der Alkylsulfonsäurearylester überraschenderweise auch über flockungsstabilisierende Eigenschaften für Pigment-Zusammensetzungen verfügen. Diese Verbindungen sind bereits als Weichmacher für Kunststoffe bekannt.

Gegenstand der vorliegenden Erfindung sind Pigment-Zusammensetzungen enthaltend
a) mindestens ein Pigment und
b) mindestens einen Alkylsulfonsäurearylester.

Der Begriff "Zusammensetzung" bedeutet eine Mischung oder Zubereitung aus zwei oder mehr Komponenten. Alle mit dem Begriff "enthaltend" beanspruchten Zusammensetzungen können zusätzlich Additive oder Hilfs- und Zusatzstoffe enthalten falls nicht ausdrücklich anders definiert.

Die erfindungsgemäßen Zusammensetzungen sind vorzugsweise im Wesentlichen frei von Wasser, Lösungsmitteln, flockungsstabilisierenden Additiven, insbesondere Dispergiermitteln, und von weiteren Weichmachern, insbesondere solche aus der Klasse der Phthalate, Benzoate, Adipate, Citrate, Trimellitate.

In einer bevorzugten Ausführungsform sind die erfindungsgemäßen Pigment-Zusammensetzungen im Wesentlichen Phthalat-frei.

Die Verbindungsklasse der Phthalate ist dem Fachmann bekannt. Insbesondere enthalten die erfindungsgemäßen Zusammensetzungen keine Vertreter aus dieser Verbindungsklasse. Als Beispiele für solche Phthalate seien genannt Benzylbutylphthalat (BBP), Di-2-ethylhexylphthalat (DEHP), Diisononylphthalat (DINP) und Diisodecylphthalat (DIDP).

Im Wesentlichen Phthalat-frei bedeutet im Rahmen der Erfindung ein Phthalat-Gehalt von weniger als 0,1 Gew.-%, insbesondere weniger als 0,01 Gew.-% bezogen auf das Gewicht der Summe der Komponenten a) und b). Das bedeutet, dass bis auf Spuren, die allgegenwärtig in der Umwelt vorhandenen sind, keine Phthalate enthalten sind.

In einer bevorzugten Ausführungsform enthält die erfindungsgemäße Pigment-Zusammensetzung
a) 5 - 70 Gew.-% an mindestens einem Pigment und
b) 95 - 30 Gew.-% an mindestens einem Alkylsulfonsäurearylester, wobei die Summe der Gewichtsprozente der Komponenten a) und b) 100 Gew.-% ergibt.

In einer besonders bevorzugten Ausführungsform enthält die erfindungsgemäße Pigment-Zusammensetzung die Komponente a) in einer Menge von 5 bis 60 Gew.-%, ganz besonders bevorzugt von 10 bis 50 Gew.-% und die Komponente b) in einer Menge von 95 bis 40 Gew.-%, ganz besonders bevorzugt von 90 bis 50 Gew.- %, wobei die Summe der Gewichtsprozent der Komponenten a) und b) jeweils 100 Gew.-% ergibt.

Die erfindungsgemäßen Pigment-Zusammensetzungen können entweder nur aus den Komponenten a) und b) bestehen oder sie können außerdem einen oder mehrere Zusatzstoffe enthalten. In diesem Fall sind die Mengen an Komponente a) und Komponente b) innerhalb der angegebenen Bereiche so auszuwählen, dass die Summe aller Komponenten in der Zusammensetzung 100 % ergibt.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

Als Pigmente a) können prinzipiell alle organischen und anorganischen Pigmente eingesetzt werden. Beispielsweise organische Pigmente wie Perylen-, Perinon-, Chinacridon-Chinacridonchinon-, Anthrachinon-, Anthanthron-, Benzimidazolon-, Disazokondensations-, Azo-, Indanthron-, Phthalocyanin-, Triarylcarbonium-, Dioxazin-. wie beispielsweise Triphendioxazin, Aminoanthrachinon-, Diketopyrrolopyrrol-, Indigo-, Thioindigo-, Thiazinindigo-, Isoindolin-, Isoindolinon-, Pyranthron-, Isoviolanthron-, Flavanthron-, Anthrapyrimidin- oder Carbon Black-Pigmente (Ruß), Mischkristalle oder Mischungen davon; oder anorganische Pigmente wie beispielsweise Titandioxid-, Zinksulfid-, Zinkoxid-, Eisenoxid-, Chromoxid-, Mischmetalloxid- (wie beispielsweise Nickelrutilgelb, Chromrutilgelb, Kobaltblau, Kobaltgrün, Zinkeisen-braun, Spinelschwarz), Cadmium-, Wismuth-, Chromat-, Ultramarin-, Eisenblaupigmente und Mischungen daraus und Mischungen aus anorganischen und organischen Pigmenten.

Es werden zweckmäßigerweise die bei ihrer Synthese oder bei ihrer Reinigung grobkristallin anfallenden Rohpigmente, Mischungen dieser Rohpigmente, Pigmentzubereitungen dieser Rohpigmente, oberflächenbehandelte Rohpigmente oder grobkristalline Mischkristallrohpigmente eingesetzt, insbesondere grobkristalline Chinacridonrohpigmente der beta- oder der gamma-Phase, grobkristalline Chinacridonmischkristallrohpigmente, grobkristalline Kupferphthalocyaninrohpigmente, grobkristalline chlorierte Kupferphthalocyanine, grobkristalline Dioxazin-, Perylen-, Indanthron-, Perinon-, Chinacridonchinon-, Anthrachinon-, Aminoanthrachinon- und Anthanthronrohpigmente.

Unter grobkristallinen Rohpigmenten werden solche Rohpigmente verstanden, die erst nach einer Zerkleinerung der Teilchen zum Pigmentieren von organischen Materialien geeignet sind. In den meisten Fällen sind dies solche mit einer mittleren Teilchengröße D₅₀ von mehr als 1µm.

Es können auch bereits feinverteilte, aber stark agglomerierte und damit schwer dispergierbare Präpigmente oder schwer dispergierbare Pigmente oder auch Mischungen von grobkristallinen Rohpigmenten, Präpigmenten und Pigmenten eingesetzt werden. Selbstverständlich sind auch leicht dispergierbare Pigmente, Präpigmente oder Rohpigmente für die erfindungsgemäßen Zusammensetzungen geeignet.

Beispiele für geeignete organische Pigmente a) sind:
Monoazopigmente wie:
   C.I. Pigment Brown 25;
   C.I. Pigment Orange 5, 13, 36 und 67;
   C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251;
   C.I. Pigment Yellow 1, 3, 73, 74, 65, 97, 151 und 183;
Disazopigmente wie:
   C.I. Pigment Orange 16, 34 und 44;
   C.I. Pigment Red 144, 166, 214 und 242;
   C.I. Pigment Yellow 12, 13, 14, 16, 17, 81, 83, 106, 113, 126, 127, 155, 174, 176 und 188,
Anthanthronpigmente wie:
   C.I. Pigment Red 168
   (C.I. Vat Orange 3);
Anthrachinonpigmente wie:
   C.I. Pigment Yellow 147 und 177;
   C.I. Pigment Violet 31;
Anthrapyrimidinpigmente wie:
   C.I. Pigment Yellow 108
   (C.I. Vat Yellow 20),
   Chinacridonpigmente wie:
   C.I. Pigment Red 122, 202 und 206;
   C.I. Pigment Violet 19;
Chinophthalonpigmente wie:
   C.I. Pigment Yellow 13 8;
Dioxazinpigmente wie:
   C.I. Pigment Violet 23 und 37,
Flavanthronpigmente wie:
   C.I. Pigment Yellow 24;
   (C.I. Vat Yellow 1);
Indanthronpigmente wie:
   C.I. Pigment Blue 60;
   (C.I. Vat Blue 4)
      und 64 (C.I. Vat Blue 6);
Isoindolinpigmente wie:
   C.I. Pigment Orange 69;
   C.I. Pigment Red 260;
   C.I. Pigment Yellow 139 und 185;
Isoindolinonpigmente wie:
   C.I. Pigment Orange 61;
   C.I. Pigment Red 257 und 260;
   C.I. Pigment Yellow 109, 110, 173 und 185;
Isoviolanthronpigmente wie:
   C.I. Pigment Violet 31;
   (C.I. Vat Violet 1);
Metallkomplexpigmente wie:
   C.I. Pigment Yellow 117, 150 und 153;
   C.I. Pigment Green 8;
Perinonpigmente wie:
   C.I. Pigment Orange 43;
   (C.I. Vat Orange 7);
   C.I. Pigment Red 194;
   (C.I. Vat 15);
Perylenpigmente wie:
   C.I. Pigment Black 31 und 32;
   C.I. Pigment Red 123, 149, 178, 179, (C.I. Vat Red 23), 190 und 240;
   C.I. Pigment Violet 29;
Phthalocyaninpigmente wie:
   C.I. Pigment Blue 15, 15:1, 15:2, 15:3, 15:4, 15:6 und 16;
   C.I. Pigment Green 7 und 36;
Pyranthronpigmente wie:
   C.I. Pigment Orange 51;
   C.I. Pigment Red 216;
   (C.I. Vat Orange 4);
Thioindigopigmente wie:
   C.I. Pigment Red 88 und 181;
   (C.I. Vat Red 1);
   C.I. Pigment Violet 38;
   (C.I. Vat Violet 3);
Triarylcarboniumpigmente wie:
   C.I. Pigment Blue 1, 61 und 62;
   C.I. Pigment Green 1;
   C.I. Pigment Red 81, 81:1 und 169;
      - C.I. Pigment Black 1 (Anilinschwarz);
      - C.I. Pigment Yellow 101 (Aldazingelb);
      - C.I. Pigment Brown 22.
Küpenfarbstoffe (außer den bereits oben genannten) wie:
   - C.I. Vat Yellow 2, 3, 4, 5, 9, 10, 12, 22, 26, 33, 37, 46, 48, 49 und 50;
   - C.I. Vat Orange 1, 2, 5, 9, 11, 13, 15, 19, 26, 29, 30 und 31;
   - C.I. Vat Red 2, 10, 12, 13, 14, 16, 19, 21, 31, 32, 37, 41, 51, 52 und 61;
   - C.I. Vat Violet 2, 9, 13, 14, 15, 17 und 21;
   - C.I. Vat Blue 1 (C.I. Pigment Blue 66), 3, 5, 10, 12, 13, 14, 16, 17, 18, 19, 20, 22, 25, 26, 29, 30, 31, 35, 41, 42, 43, 64, 65, 66, 72 und 74;
   - C.I. Vat Green 1, 2, 3, 5, 7, 8, 9, 13, 14, 17, 26, 29, 30, 31, 32, 33, 40, 42, 43, 44 und 49;
   - C.I. Vat Green 1, 2, 3, 5, 7, 8, 9, 13, 14, 17, 26, 29, 30, 31, 32, 33, 40, 42, 43, 44 und 49;
   - C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84,
   - C.I. Vat Black 1, 2, 7, 8, 9, 13, 14, 16, 19, 20, 22, 25, 27, 28, 29, 30, 31, 32, 34, 36, 56, 57, 58, 63, 64 und 65;
Beispiele für geeignete anorganische Pigmente a) sind:
   Weißpigmente wie:
      Titandioxid (C.I. Pigment White 6), Zinkweiß, Farbenzinkoxid; Zinksulfid, Lithopone; Bleiweiß;
Schwarzpigmente wie:
   Eisenoxidschwarz (C.I. Pigment Black 11), Eisen-Mangan-Schwarz, Spinellschwarz (C.I. Pigment Black 27); Ruß
(C.I. Pigment Black 7);
Buntpigmente wie:
   Chromoxid (C.I. Pigment Green 17), Chromoxidhydratgrün; Chromgrün (C.I. Pigment Green 48); Cobaltgrün (C.I. Pigment Green 50); Ultramaringrün;
   Kobaltblau (C.I. Pigment Blue 28 und 36); Ultramarinblau; Eisenblau (C.I. Pigment Blue 27); Manganblau; Ultramarinviolett; Kobalt- und Manganviolett;
   Eisenoxidrot (C.I. Pigment Red 101); Cadmiumsulfoselenid (C.I. Pigment Red 108); Molybdatrot (C.I. Pigment Red 104); Ultramarinrot;
   Eisenoxidbraun, Mischbraun, Spinell- und Korundphasen (C.I. Pigment Brown 24, 29 und 31), Chromorange; Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
Metalleffektpigmente auf der Basis beschichteter Metallplättchen; Perlglanzpigmente auf der Basis metalloxidbeschichteter Glimmerplättchen; Flüssigkristallpigmente.
Als bevorzugte Pigmente a) sind dabei Monoazopigmente (insbesondere verlackte BONS-Pigmente, Naphtol AS-Pigmente), Disazopigmente (insbesondere Diarylgelbpigmente, Bisacetessigsäureacetanilidpigmente, Disazopyrazolonpigmente), Diketopyrrolopyrrolpigmente, Chinacridonpigmente, Chinophthalonpigmente, Perinonpigmente, Phthalocyaninpigmente, Triarylcarboniumpigmente (Alkaliblaupigmente, verlackte Rhodamine, Farbstoffsalze mit komplexen Anionen), Isoindolinpigmente und Ruße (insbesondere Gas- oder Ofenruße), Titandioxid, Chromoxid, Eisenoxidrot, Eisenoxidgelb, Bismutvanadat, Kobaltblau und Utramarinblau zu nennen.

Beispiele für besonders bevorzugte organische Pigmente a) sind: C.I. Pigment Yellow 138, 1, 83, C.I. Pigment Red 95, 122, 112,254, C.I. Pigment Violet 19, 23, C.I. Pigment Blue 15:3, 15:0, 15:1 und 15:4, C.I. Pigment Black 7, C.I. Pigment Orange 5, 34, 38,43 und 73 und C.I. Pigment Green 7.

Weiterhin besonders bevorzugte Pigmente a) sind solche vom Typ Ruße, die in einer 5 %-igen wässrigen Anschlämmung einen pH-Wert ≤ 4,5 aufweisen, wie Spezialschwarz 4, Spezialschwarz 4a, Spezialschwarz 5, Spezialschwarz 6, Spezialschwarz 100, Spezialschwarz 250, Spezialschwarz 350, Spezialschwarz 550, sowie Farbruße der Typen FW 200, FW 2, FW 2V, FW 285, FW 1, FW 18, S 160, S 170, Printex Typen V, 140 U, 140 U, Pigment Yellow 150, Pigmente Yellow 74, Pigment Blue 15:3, Pigment blue 15:2, Pigment blue 15:1, Pigment Red 122.

Beispiele für besonders bevorzugte anorganische Pigmente a) sind: C.I. Pigment Yellow 184, 42, C.I. Pigment Red 101, C.I. Pigment Blue 28,36 und 29, C.I. Pigment Black 33, C.I. Pigment White 6 und C.I. Pigment Green 17.

Bevorzugt enthalten die erfindungsgemäßen Zusammensetzungen als Komponente b) mindestens einen Alkylsulfonsäurearylester der allgemeinen

Formel (I) R¹-SO₂-O-R² (I)

worin
R¹ für geradkettiges oder verzweigtes C₁₀- bis C₂₁-Alkyl steht, und
R² für unsubstituiertes Phenyl oder für Phenyl das ein-, zwei- oder dreifach mit C₁- bis C₄-Alkyl substituiert ist, steht.
Als substituiertes Phenyl seien genannt 2-, 4- und 6-Methylphenyl, 2,6-Dimethylphenyl, 2,4-Dimethylphenyl, 2,4,6-Trimethylphenyl, 2,4-Dimethyl-6-tert.-butylphenyl, 2-, 4-, und 6-Isopropylphenyl, 2-, 4- und 6-n-Butylphenyl, und 2-, 4- und 6-tert-Butylphenyl.

Besonders bevorzugt enthalten die erfindungsgemäßen Zusammensetzungen als Komponente b) mindestens einen Alkylsulfonsäurearylester der Formel (I), worin
R¹ für geradkettiges C₁₀- bis C₂₁-Alkyl, ganz besonders bevorzugt für geradkettiges C₁₀- bis C₁₈-Alkyl, insbesondere für geradkettiges C₁₄- bis C₁₇-Alkyl steht, und
R² für Phenyl steht.

Insbesondere steht R¹ für C₁₄-, C₁₅-, C₁₆- oder C₁₇-Alkyl.

In einer bevorzugten Ausführungsform enthalten die erfindungsgemäßen Zusammensetzungen als Komponente b) ein Gemisch aus mindestens zwei C₁₄- bis C₁₇-Alkylsulfonsäurephenylestern, z.B. MESAMOLL® oder MESAMOLL® II (Handelsprodukte der Firma LANXESS Deutschland GmbH, CAS Nummern 91082-17-6 und 70775-94-9).

Die Alkylsulfonsäurearylester der Komponente b) sind bekannte Vertreter aus der Klasse der phthalatfreien Weichmacher.

In einer alternativen Ausführungsform der vorliegenden Erfindung enthalten die erfindungsgemäßen Zusammensetzungen zusätzlich mindestens ein epoxidiertes Pflanzenöl c).

Im Sinne der vorliegenden Erfindung handelt es sich bei Pflanzenölen (pflanzliche Öle) um aus Ölpflanzen gewonnene Fette und fette Öle. Pflanzenöle sind Triglyceride mit unterschiedlichen Fettsäuren und unterschiedlich langen Kohlenstoffketten mit gesättigten und/oder ungesättigten Funktionen. Durch Umsetzung der verschiedenen, meist raffinierten Pflanzenölen wie z.B. Sojabohnenöle, Avocadoöl, Olivenöl, Erdnussöl, Palmöle oder Rapsöle mit Persäuren können die ungesättigten Doppelbindungen der Pflanzenöle in Epoxide überführt werden.

Bevorzugt handelt es bei der Komponente c) um epoxidiertes Sojabohnenöl, epoxidiertes Leinöl, epoxidiertes Olivenöl, epoxidiertes Rüböl, epoxidiertes Sonnenblumenöl, epoxidiertes Palmkernöl, epoxidiertes Palmöl, epoxidiertes Kokosöl, epoxidiertes Rapsöl, epoxidiertes Rizinusöl oder epoxidiertes Distelöl. Die genannten Verbindungen können einzeln oder in beliebiger Mischung untereinander eingesetzt werden. Besonders bevorzugt wird als Komponente b) epoxidiertes Sojabohnenöl (CAS Nr. 8013-07-8) und/oder epoxidiertes Leinöl (CAS Nr. 8016-11-3) eingesetzt.

Bei den epoxidierten pflanzlichen Ölen der Komponente c) beträgt der Epoxid-Sauerstoffgehalt im allgemeinen zwischen 6 und 11 Gewichtsprozent bezogen auf das Gesamtgewicht des pflanzlichen Öls. Bei dem bevorzugt eingesetzten epoxidierten Sojabohnenöl liegt der Epoxid-Sauerstoffgehalt bei 6 bis 8 Gewichtsprozent, bei dem epoxidierten Leinöl bei 8,5 bis 11 Gewichtsprozent.

Die epoxidierten pflanzlichen Öle sind bekannt und als Handelsprodukte verfügbar; epoxidiertes Sojabohnenöl beispielsweise über Varteco Quimica Puntana S.A., epoxidiertes Leinöl beispielsweise über HallStar.

In einer bevorzugten Ausführungsform wird als Komponente c) epoxidiertes Sojabohnenöl (ESBO) eingesetzt.

Im allgemeinen wird die Komponente c) in einer Menge von 0 bis 90 Gewichtsteilen, bevorzugt 0 bis 70 Gewichtsteilen und besonders bevorzugt 0 bis 50 Gewichtsteilen, bezogen auf 100 Gewichtsteile an erfindungsgemäßer Zusammensetzung eingesetzt.

Die erfindungsgemäßen Zusammensetzungen können gegebenenfalls noch einen oder mehrere Hilfs- und/oder Zusatzstoffe enthalten. Als solche kommen Füllstoffe, Stellmittel, Wachse, Entschäumer, Extender, Konservierungsmittel, Trocknungsverzögerungsmittel, beispielsweise Zucker, wie Rohrzucker, oder Harnstoffe, Additive zur Steuerung der Rheologie, Netzmittel, Antioxidantien, UV-Absorber, Lichtstabilisatoren, oder eine Kombination davon in Frage. Diese Stoffe können in einer Menge von 0 bis 20 Gewichtsteilen bezogen auf 100 Gewichtsteile der erfindungsgemäßen Zusammensetzung enthalten sein.

Die erfindungsgemäßen Pigment-Zusammensetzungen können in an sich bekannter Art und Weise hergestellt werden, beispielsweise durch Mischen der Komponenten a) und b), gegebenenfalls unter Zusatz der Komponente c) und gegebenenfalls unter Zusatz von einem oder mehreren Hilfs- und/oder Zusatzstoffen. Bevorzugt werden die Komponenten miteinander dispergiert unter Verwendung von hierzu geeigneten Apparaturen.

Für die Herstellung der erfindungsgemäßen Zusammensetzungen werden üblicherweise feinteilige Pigmente a) eingesetzt. Die Mischung der Komponenten a), b) und gegebenenfalls c) und gegebenenfalls weiterer Hilfs- und/oder Zusatzstoffe erfolgt hierbei beispielsweise durch Dispergierung in Rolhnühlen, Schwingmühlen, Rührwerkskugelmühlen mit niedriger oder hoher Energiedichte, Mischern, Walzenstühlen oder Knetern. Der verwendete Dispergierapparat ist abhängig von der Dispergierbarkeit des eingesetzten Pigments a) und den gegebenenfalls verwendeten Hilfs- und Zusatzstoffen.

Weiterer Gegenstand der vorliegenden Erfindung ist die Verwendung der erfindungsgemäßen Pigment-Zusammensetzungen zum Einfärben von technischen Materialien.

Unter technischen Materialien sind im Sinne der vorliegenden Erfindung beispielsweise kunststoffhaltige und nichtkunststoffhaltige technische Materialien zu verstehen.

Als nichtkunststoffhaltige technische Materialien seien beispielsweise Materialien genannt, die in den folgenden Bereichen Verwendung finden: dem Baustoffbereich, dem Beschichtungssektor im industriellen und Verbraucherbereich, der Textilbereich/Lederbereich, der Naturstoffbereich, der Print und Papierbereich, der Reinigungsmittel- und Sanitärbereich, der bildgebenden Bereich oder im Elektronikbereich, oder im Medizinbereich und im Health Care Bereich.

Die erfindungsgemäßen Zusammensetzungen können insbesondere zum Einfärben von Baustoffen, Beschichtungsmitteln, Textilien und Leder, Naturstoffen, Papiere, Ink-jet Zusammensetzungen, Toner und Entwickler für bildgebende Systeme sowie für Pflanzenbehandlungsmittel eingesetzt werden.

Folgende Beispiele aus den oben genannten Bereichen sollen dies verdeutlichen:
Baustoffbereich: eingefärbte Bodenbeschichtungen auf Basis Zement/Portlandzement,
Beschichtungssektor: Möbelkantenumleimer,
Textilbereich: bedruckte Bekleidung,
Naturstoffbereich: Einfärbung und Konservierung von Hölzern,
Printbereich: Komponenten für den Ink jet Bereich,
Bildgebender Bereich: elektrophotographische Toner oder Entwickler
Papierbereich: Spezialbeschichtete Papiere/Photopapiere oder Schleifmittel auf Papier
Health Care: Pflanzenschutzzubereitungen oder Beizmittel.

Als kunststoffhaltige technische Materialien seien Materialien genannt, die Kunststoffe, Thermoplaste und/oder Gummi enthalten oder daraus bestehen.

Unter dem Begriff "Kunststoffe" sind im Sinne der vorliegenden Erfindung makromolekulare, polymere Verbindungen zu verstehen, die durch Umsetzung von monomeren Verbindungen, z.B. durch Polymerisationsreaktion, hergestellt wurden, wobei Homo- und Copolymere gleichermaßen umfasst sind.

Unter dem Begriffe "Thermoplaste" sind im Sinne der vorliegenden Erfindungen Polymere zu verstehen, die oberhalb einer bestimmten Temperatur weich und formbar werden, die also bei hohen Temperaturen unterhalb der Zersetzungstemperatur fließfähig sind und die beim Erkalten wieder fest werden. Ein Polymer ist eine makromolekulare Verbindung die durch Umsetzung (z.B. Polymerisation, Polykondensation) von Monomeren des gleichen oder unterschiedlichen Typs erzeugt wird. Thermoplaste werden durch Kettenpolymerisation, Polyaddition und/oder Polykondensation hergestellt.

Der Begriff "Gummi" umfasst natürlichen und synthetischen Gummi. Unter dem Begriff "Gummi" sind im Sinne der vorliegenden Erfindung Elastomere zu verstehen, die bis zu ihrer Zersetzungstemperatur vernetzte (vulkanisierte) Polymerwerkstoffe sind, die bei niedrigen Temperaturen glasartig hart sind und selbst bei hohen Temperaturen nicht viskos fließen, sondern sich insbesondere bei Raumtemperatur gummielastisch verhalten. Gummielastisches Verhalten ist gekennzeichnet durch einen relativ niedrigen Schubmodul mit vergleichsweise geringer Temperaturabhängigkeit.

Vorzugsweise eignen sich die erfindungsgemäßen Zusammensetzungen zum Einfärben von Kunststoffen d) aus der Reihe Polyvinylchlorid, Vinylchlorid-basierte Copolymere, Polyvinylidenchlorid, Polyvinylacetale, Polyacrylate, Polyamide, Polyurethane, Polylactide, Polymilchsäuren, Cellulose oder ihre Derivate, Kautschukpolymere (Gummi) wie Acrylnitril-Butadien-Kautschuk, hydrierter Acrylniril-Butadien-Kautschuk, Chloroprenkautschuk, chloriertes Polyethylen, Chlorsulfonylpolyethylen, Ethylen-Propylen-Kautschuk, Acrylatkautschuk und/oder Epichlorhydrinkautschuk. Die genannten Kunststoffe können auch in beliebiger Mischung untereinander vorliegen. Besonders bevorzugt ist Polyvinylchlorid und Kautschuk.

Als PVC-Typen kommen beispielsweise Suspensions-, Masse-, Mikrosuspensions- PVC, bevorzugt Emulsions-PVC in Frage.

Bei ihrem Einsatz zum Einfärben von Kunststoffen d) werden die erfindungsgemäßen Zusammensetzungen vorzugsweise in einer Menge von 0,1 bis 50 Teilen, bevorzugt 0,1 bis 40 Teilen, besonders bevorzugt 1 bis 30 Teilen auf 100 Teile Kunststoff eingesetzt.

Bei ihrem Einsatz zum Einfärben von PVC werden die erfindungsgemäßen Zusammensetzungen vorzugsweise in einer Menge von 0,1 bis 50 Teilen auf 100 Teile PVC, bevorzugt 0,1 bis 40 Teilen auf 100 Teile PVC, besonders bevorzugt 1 bis 30 Teilen auf 100 Teile PVC eingesetzt.

Weiterer Gegenstand der vorliegenden Erfindung ist ein Verfahren zum Einfärben von Kunststoffen, insbesondere von PVC, das dadurch gekennzeichnet ist, dass eine erfindungsgemäße Zusammensetzung mit mindestens einem Kunststoff d), bevorzugt mit mindestens einem PVC, und gegebenenfalls einem oder mehreren Polymeradditiven i) in einer Mischapparatur gemischt wird. Anschließend kann die gefärbte Kunststoffmasse in die gewünschte Form gebracht werden, beispielsweise durch injection moulding, extrusion, moulding and coating.

Als Polymeradditive i) im Sinne der vorliegenden Erfindung kommen beispielsweise Verbindungen aus der Gruppe der Weichmacher, Stabilisatoren, Antioxidantien, Gleitmittel, Füllstoffe, Pigmente, Flammschutzmittel, Lichtstabilisatoren, Treibmittel, Kicker, polymere Verarbeitungshilfsmittel, Schlagzähverbesserer, optische Aufheller, Antistatika und/oder Biostabilisatoren in Frage.

Weiterer Gegenstand der vorliegenden Erfindung sind Polymer-Zusammensetzungen enthaltend eine erfindungsgemäße Zusammensetzung und mindestens einen Kunststoff d) und gegebenenfalls mindestens ein Polymeradditiv i).

In einer bevorzugten Ausführungsform der vorliegenden Erfindung handelt es sich bei den erfindungsgemäßen Polymer-Zusammensetzungen um Polyvinylchlorid-Zusammensetzungen und Kautschuk.

Die erfindungsgemäßen Polymer-Zusammensetzungen, insbesondere Polyvinylchlorid-Zusammensetzungen enthalten vorzugsweise auf 100 Gewichtsteile an mindestens einem Kunststoff d), insbesondere vorzugsweise auf 100 Gewichtsteile Polyvinylchlorid, 1 bis 80 Gewichtsteile, bevorzugt 1 bis 70 Gewichtsteile, besonders bevorzugt 1 bis 60 Gewichtsteile an mindestens einer erfindungsgemäßen Zusammensetzung und

0 bis 20 Gewichtsteile, bevorzugt 0 bis 30 Gewichtsteile und besonders bevorzugt 0 bis 40 Gewichtsteile an mindestens einem Polymeradditv i).

Die erfindungsgemäßen Polymer-Zusammensetzungen lassen sich in bekannter Art und Weise durch Mischen einer erfindungsgemäßen Zusammensetzung mit mindestens einem Kunststoff d), vorzugsweise mindestens einem Polyvinylchlorid, und gegebenenfalls mindestens einem Polymeradditiv i) in einer geeigneten Mischapparatur, vorzugsweise in Rühr- und Mischwerken, Verdünnungsanlagen und statischen Mischern, in den für diese Komponenten angegebenen Mengenverhältnissen herstellen.

Die erfindungsgemäßen PVC- Zubereitungen können als Trockenmischung, dry blends, oder Flüssigmischungen, Pasten, gemischt und gegebenenfalls nach einer zusätzlichen Aufarbeitung zum Granulat weiter verarbeitet werden.

Derartige Verarbeitungsprozesse sind, nicht einschränkend, Extrudieren, Spritzgießen, Spritzen, Kalandrieren, Rotationsformen, Tauchen, Streichen, Beschichten, Sintern, und Gießen.

Die mittels der erfindungsgemäßen Pigment-Zusammensetzung hergestellten, gefärbten Kunststoffe, insbesondere Polyvinylchlorid, sind ebenfalls Gegenstand der vorliegenden Erfindung.

Gegenstand der vorliegenden Erfindung ist auch ein Verfahren zur Herstellung von gefärbtem Kunststoff, insbesondere Polyvinylchlorid, das dadurch gekennzeichnet ist, dass mindestens ein Kunststoff, insbesondere Polyvinylchlorid, mit einer erfindungsgemäßen Pigment-Zusammensetzung oder einer erfindungsgemäßen Polymer-Zusammensetzung, gegebenenfalls in Gegenwart von Verarbeitungshilfsmitteln, in einer Mischvorrichtung gemischt und homogenisiert wird, anschließend die Mischung geformt wird, insbesondere durch Extrudieren, Spritzgießen, Spritzen, Kalandrieren, Rotationsformen, Tauchen, Streichen, Beschichten, Sintern oder Gießen ausgeformt und die geformte Mischung dann erhitzt wird, vorzugsweise auf eine Temperatur im Bereich von 150 bis 220 °C.

In einer bevorzugten Ausführungsform sind die erfindungsgemäßen Pigment-Zusammensetzungen, Polymer-Zusammensetzungen und Kunststoffe im Wesentlichen Phthalat-frei.

Die mittels der erfindungsgemäßen Pigment-Zusammensetzungen oder Polymerzusammensetzungen hergestellten Kunststoffe, insbesondere Polyvinylchlorid, sind ebenfalls Gegenstand der vorliegenden Erfindung.

Die erfindungsgemäßen Kunststoffe können weiterverarbeitet werden. Solche Endprodukte sind insbesondere Fußböden, Tapeten, Kunstleder, Profile, Draht- und Kabelummantelungen, Folien, Beschichtungen und Beschichtungsmassen, Lacke, Farben, Tinten, Klebstoffe, Dichtstoffe, Klebstoff-, Dichtstoff- und Klebdichtstoffkomponenten.

Die vorliegende Erfindung betrifft deshalb auch die Verwendung der erfindungsgemäßen Polymer-Zusammensetzungen und der erfindungsgemäßen Zusammensetzungen zur Herstellung der genannten Endprodukte.

Die erfindungsgemäßen Zusammensetzungen sind über einen langen Zeitraum stabil gegen Ausflockung. Überraschenderweise kann in den erfindungsgemäßen Zusammensetzungen auf den Zusatz von Dispergieradditiven verzichtet werden.

Die erfindungsgemäßen Pigment-Zubereitungen sind fließfähig, wodurch eine staubfreie Verarbeitung und ein genaues Dosieren ermöglicht wird.

Die Stabilität der erfindungsgemäßen Pigment-Zusammensetzungen wurde durch Langzeitlagerung bei Raumtemperatur und 60° C visuell bestimmt.

### Beispiele:

### a) Herstellung der erfindungsgemäßen Pigment-Zusammensetzungen

Die Herstellung der erfindungsgemäßen Pigment-Zusammensetzungen erfolgt mit einem Dissolver. Es wurden jeweils Mischungen aus den Pulverpigmenten Pigment Green 17 (P.G. 17), Pigment Yellow 42 (P.Y. 42), Pigment Blue 7 (P.Bl. 7), Pigment Red 254 (P.R. 254) und Pigment Red 101 (P.R. 101) mit Mesamoll® (Produkt der Lanxess Deutschland GmbH, Deutschland, CAS-Nummer 91082-17-6) für 5 Minuten angeschlagen und anschließend bei einer Drehzahl von 3000 U/min für 20 Minuten, ohne Dispergierhilfsmittel, dispergiert bis sich eine homogene Oberfläche und ein gleichmäßiger Doughnut (Ausbildung eines bis auf die Scheibe herabreichenden Sogkegels) bildete.

Durch die Verwendung von Mesamoll erfolgte kein Aufschwimmen beim Eintrag der Pigmente wodurch eine besonders einfache Einarbeitung möglich war. Das geringe Schaumverhalten, bedingt durch die Abwesenheit von Dispergieradditiven begünstigte die schaumarme Herstellung bzw. erübrigte die Zugabe eines Entschäumers.

### b) Herstellung der nicht erfindungsgemäßen Pigment-Zusammensetzungen

Die Herstellung der Referenzzubereitung erfolgt unter gleichen Bedingungen wie die der erfindungsgemäßen Zusammensetzungen. Es wurden die gleichen Pigmente wie unter a) Beschrieben jeweils mit DINP (Di-isononyl phthalat, Handelsprodukt der Firma EVONIK/Marl, Handelsname Vestinol® 9 (CAS-Nummer 28553-12-0)) angeschlagen und mit einem Dissolver für 20 Minuten bei einer Drehzahl von 3000 U/min, ohne Verwendung von Dispergierhilfsmittel, dispergiert bis ein gleichmäßiger Doughnut entstand.

### c) Prüfung des Absetzverhaltens und Stabilität der Pigemtpasten

Von den gemäß a) und b) hergestellten erfindungsgemäßen und nicht erfindungsgemäßen Pigment-Zusammensetzungen wurde jeweils ein Muster bei 60°C für 4 Wochen in Glaszylindern gelagert. Die Prüfung des Absetzverhaltens erfolgt durch Beobachtung der Probe vor und nach Lagerung bei 60°C und Bestimmung der Volumenprozent an überstehender farbloser, Pigment-freier Phase gegenüber abgesetzter, pigmenthaltiger Phase. Als Parameter wurden die Festigkeit des Bodensatzes als auch die Entmischung der Pigmentpasten bestimmt.

In der nachfolgenden Tabelle 1 sind die Anteile der überstehenden farblosen Phase in Volumen-% für die erfindungsgemäßen a) und nicht erfindungsgemäßen b) Pigment-Zusammensetzungen angegeben.

Der gebildete Bodensatz ließ sich zwar bei allen Zubereitungen wieder aufrühren jedoch behielten die erfindungsgemäßen Zusammensetzungen sowohl bei RT als auch nach Lagerung bei 60°C über 4 Wochen sowohl die gleiche Konsistenz als auch eine glatte Oberfläche wie direkt nach der Dispergierung. Im Gegensatz dazu entmischen sich die nicht erfindungsgemäßen Zusammensetzungen, so dass keine Dispersion mehr vorlag.

Eine Zubereitung die sich nach kurzer Zeit entmischt kann für Flüssigdosierung nicht verwendet werden da kein konstanter Eintrag gewährleistet wird.

**Tabelle 1: Absetzverhalten 4 Wochen bei 60° C**

| | Zusammensetzung b) | Zusammensetzung a) |
|---|---|---|
| P.G.17 | 33 Vol.-% | 1-2 Vol.-% |
| P.Y.42 | 25 Vol.-% | 1 Vol.-% |
| P.B1.7 | 10 Vol.-% | 5 Vol.-% |
| P.R.254 | 40 Vol.-% | 1 Vol.-% |
| P.R.101 | 24 Vol.-% | 2-3 Vol.-% |

## Patentansprüche

1. Pigment-Zusammensetzungen enthaltend
a) mindestens ein Pigment und
b) mindestens einen Alkylsulfonsäurearylester.

2. Zusammensetzung gemäß Anspruch 1, **dadurch gekennzeichnet, dass** sie die Komponente a) in einer Menge von 5 - 70 Gew.-% und die Komponente b) in einer Menge von 95 - 30 Gew.-% enthält, wobei die Summe der Gewichtsprozente der Komponenten a) und b) 100 Gew.-% ergibt.

3. Zusammensetzung gemäß Anspruch 1 oder 2, **dadurch gekennzeichnet, dass** als Komponente a) mindestens ein Pigment aus der Reihe der Monoazopigmente, Disazopigmente, Diketopyrrolopyrrolpigmente, Chinacridonpigmente, Chinophthalonpigmente, Perinonpigmente, Phthalocyaninpigmente, Triarylcarboniumpigmente, Isoindolinpigmente, Ruße, Titandioxid, Chromoxid, Eisenoxidrot, Eisenoxidgelb, Bismutvanadat, Kobaltblau und Utramarinblau enthalten ist.

4. Zusammensetzung gemäß wenigstens einem der Ansprüche 1 bis 3, **dadurch gekennzeichnet, dass** als Komponente b) mindestens ein Alkylsulfonsäurearylester der allgemeinen Formel (I)
R¹-SO₂-O-R² (I)
worin
R¹ für geradkettiges oder verzweigtes C₁₀- bis C₂₁-Alkyl steht,
und
R² für unsubstituiertes Phenyl oder für Phenyl das ein-, zwei- oder dreifach mit C₁-bis C₄-Alkyl substituiert ist, steht,
enthalten ist.

5. Zusammensetzung gemäß Anspruch 1, **dadurch gekennzeichnet, dass** mindestens ein epoxidiertes Pflanzenöl als weitere Komponente c) enthalten ist.

6. Zusammensetzung gemäß Anspruch 5, **dadurch gekennzeichnet, dass** als Komponente c) mindestens ein epoxidiertes Pflanzenöl aus der Reihe epoxidiertes Sojabohnenöl, epoxidiertes Leinöl, epoxidiertes Olivenöl, epoxidiertes Rüböl, epoxidiertes Sonnenblumenöl, epoxidiertes Palmkernöl, epoxidiertes Palmöl, epoxidiertes Kokosöl, epoxidiertes Rapsöl, epoxidiertes Rizinusöl und/oder epoxidiertes Distelöl enthalten ist.

7. Zusammensetzung gemäß wenigstens einem der Ansprüche 1 bis 6, **dadurch gekennzeichnet, dass** sie frei von Phthalaten ist.

8. Verwendung einer Zusammensetzung gemäß wenigstens einem der Ansprüche 1 bis 7 zum Einfärben von technischen Materialien, insbesondere von Kunststoffen.

9. Verwendung gemäß Anspruch 8, **dadurch gekennzeichnet, dass** es sich bei den Kunststoffen um Verbindungen aus der Reihe Polyvinylchlorid, Vinylchlorid-basierte Copolymere, Polyvinylidenchlorid, Polyvinylacetale, Polyacrylate, Polyamide, Polyurethane, Polylactide, Polymilchsäuren, Cellulose oder ihre Derivate, Kautschukpolymere (Gummi) wie Acrylnitril-Butadien-Kautschuk, hydrierter Acrylniril-Butadien-Kautschuk, Chloroprenkautschuk, chloriertes Polyethylen, Chlorsulfonylpolyethylen, Ethylen-Propylen-Kautschuk, Acrylatkautschuk und/oder Epichlorhydrinkautschuk handelt.

10. Verwendung gemäß Ansprüchen 8 oder 9, **dadurch gekennzeichnet, dass** es sich bei den Kunststoffen um mindestens ein Polyvinylchlorid handelt, insbesondere um_Suspensions-, Masse- und/oder Mikrosuspensions- PVC.

11. Verwendung gemäß wenigstens einem der Ansprüche 8 bis 10, **dadurch gekennzeichnet, dass** auf 100 Gewichtsteile Kunststoff 0,1 bis 50 Teile, bevorzugt 0,1 bis 40 Teile, besonders bevorzugt 1 bis 30 einer Zusammensetzung gemäß wenigstens einem der Ansprüche 1 bis 7 eingesetzt werden.

12. Verfahren zum Einfärben von Kunststoffen, insbesondere von PVC, **dadurch gekennzeichnet ist, dass** eine Zusammensetzung gemäß wenigstens einem der Ansprüche 1 bis 7 mit wenigstens einem Kunststoff, bevorzugt mit mindestens einem PVC, und gegebenenfalls einem oder mehreren Polymeradditiven in einer Mischapparatur gemischt wird.

13. Polymer-Zusammensetzung, **dadurch gekennzeichnet, dass** sie
a) mindestens ein Pigment,
b) mindestens einen Alkylsulfonsäurearylester,
c) gegebenenfalls mindestens ein epoxidiertes Pflanzenöl,
d) mindestens einen Kunststoff, bevorzugt mindestens ein PVC, und
gegebenenfalls mindestens ein Polymeradditiv enthält.

14. Technische Materialien, insbesondere Kunststoffe, enthaltend eine Zusammensetzung gemäß wenigstens einem der Ansprüche 1 bis 7 oder eine Polymer-Zusammensetzung gemäß Anspruch 13.

15. Verwendung von wenigstens einem technischen Material, vorzugsweise Kunststoff, gemäß Anspruch 14 zur Herstellung von Formkörpern, insbesondere Fußböden, Tapeten, Kunstleder, Profile, Draht- und Kabelummantelungen, Folien, Beschichtungen und Beschichtungsmassen, Lacke, Farben, Tinten, Klebstoffe, Dichtstoffe, Klebstoff-, Dichtstoff- und Klebdichtstoffkomponenten.
